(19) **Europäisches Patentamt / European Patent Office / Office européen des brevets**

(11) **EP 2 886 201 B1**

(12) **FASCICULE DE BREVET EUROPEEN**

(45) Date de publication et mention
de la délivrance du brevet:
**11.09.2019 Bulletin 2019/37**

(51) Int Cl.:
***B01F 5/04*** *(2006.01)*    ***B01F 5/06*** *(2006.01)*
***B01F 15/06*** *(2006.01)*    ***C08G 18/83*** *(2006.01)*
***C09J 5/06*** *(2006.01)*    ***C09J 175/04*** *(2006.01)*
***C08G 65/336*** *(2006.01)*    *B05D 1/26* *(2006.01)*
*B05D 1/34* *(2006.01)*    *B05C 5/02* *(2006.01)*
*B05C 11/10* *(2006.01)*

(21) Numéro de dépôt: **14199355.0**

(22) Date de dépôt: **19.12.2014**

(54) **Procédé d'application à chaud d'une composition adhésive silylée**

Heißanwendungsverfahren einer Silyl-Klebezusammensetzung

Method for hot application of a silylated adhesive composition

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2013 FR 1363079**

(43) Date de publication de la demande:
**24.06.2015 Bulletin 2015/26**

(60) Demande divisionnaire:
**19187679.6**

(73) Titulaire: **BOSTIK SA**
**92700 Colombes (FR)**

(72) Inventeurs:
• **Chartrel, Jean François**
**60400 Cuts (FR)**
• **Laferte, Olivier**
**60350 Trosly Breuil (FR)**
• **Lalouch, Lahoussaine**
**60400 Noyon (FR)**

(74) Mandataire: **Bandpay & Greuter**
**30, rue Notre-Dame des Victoires**
**75002 Paris (FR)**

(56) Documents cités:
**EP-A1- 1 978 069**    **WO-A1-01/02456**
**WO-A2-2012/090151**    **FR-A1- 2 760 981**
**US-A- 3 659 790**    **US-A1- 2006 233 960**

• **"2.5.3 structural acrylic adhesive" In: Adams, R.D.: "Adhesive bonding", 1 March 2005 (2005-03-01), woodhead publishing ISBN: 9781855737419 page 29,**

# Description

L'invention concerne un procédé d'application à chaud d'une composition adhésive silylée avec un approvisionnement séparé des composants de base de la composition adhésive.

Dans l'industrie des adhésifs, des surfaces adhésives peuvent être produites par la technique de l'application à chaud de la composition adhésive sur une surface. La figure 1 montre une installation 100 selon l'art antérieur d'application à chaud d'une composition adhésive 80. Cette installation 100 comprend un réservoir 82 de stockage de la composition adhésive 80, ici sous la forme d'un fût de 200 litres. La composition adhésive 80 est destinée à être appliquée sur une surface 96, ici un film de polyester défilant sur un cylindre 92 d'axe 94. Cette application est réalisée à l'aide d'une buse 90 d'encollage pour former une surface adhésive 98. L'alimentation de la buse en composition adhésive à appliquer 80 est réalisée à l'aide d'une ligne 88 de communication fluidique de la composition adhésive entre le fût et la buse 90, la ligne 88 étant munie d'une pompe 86 de circulation de la composition adhésive.

Pour faciliter l'application par la buse 90 et le pompage depuis le fût jusqu'à la buse 90, la composition adhésive 80, qui peut être un liquide très visqueux à la température ambiante est par exemple chauffée à une température de 100°C à 180°C pour présenter une viscosité suffisante. L'installation 100 comprend alors un moyen de chauffage 84 en amont de la pompe 86. Le moyen de chauffage 84 correspond par exemple à un plateau de fusion mis en contact avec la composition adhésive dans le fût. Ce plateau de fusion est chauffé électriquement par des résistances chauffantes. La quantité de chaleur communiquée du moyen de chauffage 84 à la composition adhésive 80 dépend notamment de la surface d'échange entre le moyen de chauffage 84 et la composition adhésive 80. En référence aux figures 2, 3 et 4, différentes variantes du plateau de fusion peuvent alors être envisagées, respectivement une variante 70 avec surface d'échange 76 lisse et des variantes 72 et 74 avec des surfaces d'échanges présentant des ailettes 78.

Cette installation 100 ne présente toutefois pas un fonctionnement satisfaisant dans les cas où la composition adhésive 80 à appliquer comprend un prépolymère réactif et présente une température d'application, de 100 à 120°C par exemple, trop proche d'une plage de température de réticulation, de 100°C à 140°C par exemple. En effet, une telle composition adhésive 80 chauffée dans le réservoir de stockage 82 avec une température cible de chauffage supérieure ou égale à 100°C commence à réticuler, et a fortiori en présence d'humidité. Or avec un tel moyen de chauffage 84 dans le réservoir de stockage 82, d'une part le temps de séjour de la composition adhésive 80 à 100°C est mal maîtrisé et d'autre part la température réellement appliquée est aussi mal maîtrisée. Il existe donc un risque de réticulation complète de la composition adhésive 80 au contact des ailettes 78 du moyen de chauffage 84, résultant en la formation d'un bloc compact réticulé. Un tel bloc réticulé est susceptible de boucher le plateau de fusion 72 ou 74 et d'empêcher toute circulation de composition adhésive 80 fluide jusqu'à la buse d'application 90.

Ce risque d'encrassement du plateau de fusion 72 ou 74 est particulièrement aggravé pour les compositions adhésives réticulant avec l'humidité. En effet, chaque changement de fût expose les résidus de compositions adhésives sur le plateau à l'humidité de l'air renforçant alors la réticulation de ces résidus sur le plateau.

Un autre exemple d'installation pour l'application à chaud d'une composition adhésive est décrit dans WO 2012/090151.

Il existe donc un besoin pour l'application d'une composition adhésive réactive présentant une température d'application proche d'une température de réticulation.

Plus particulièrement, l'invention vise à fournir une installation et un procédé d'application d'une telle composition adhésive.

A cette fin, la présente invention propose un procédé d'application à chaud d'une composition adhésive sur un support, à l'aide d'une installation d'application à chaud de la composition adhésive, l'installation comprenant :

- une buse d'application de la composition adhésive,
- une ligne d'alimentation de la buse avec la composition adhésive à appliquer sous forme fluide,
- un mélangeur disposé dans la ligne d'alimentation pour le mélange homogène des composants de base de la composition adhésive avant son application ;

la composition adhésive appliquée comportant comme composants de base :

- de 20% à 85% en poids, de préférence de 30 à 75% en poids de prépolymère silylé,
- de 15 à 80% en poids, de préférence de 25 à 70% en poids de résine tackifiante compatible ;

la composition adhésive comprenant en outre de 0,01 à 3 % en poids, de préférence de 0,1 à 2% en poids de catalyseur de réticulation ;
le procédé comprenant :

- l'approvisionnement de la ligne d'alimentation avec l'au moins un prépolymère silylé séparé du catalyseur de réticulation,
- le mélange du catalyseur de réticulation avec les composants de base à l'aide du mélangeur,
- l'application à chaud de la composition adhésive mélangée sur un support à l'aide la buse d'application ;

la composition adhésive à appliquer comprenant un prépolymère réactif réticulant dans une plage de température, la composition adhésive à appliquer présentant une plage de température d'application incluse dans la plage de température de réticulation.

Suivant des modes de réalisation préférés, l'invention comprend une ou plusieurs des caractéristiques suivantes :

- lors de l'approvisionnement de la ligne, le catalyseur de réticulation est séparé de l'ensemble des composants de base de la composition adhésive ;
- le mélangeur est un mélangeur statique, de préférence le mélangeur statique comporte un matériaux conducteur, l'installation d'application à chaud comprenant un dispositif de chauffage en ligne, en amont du point de mélange du catalyseur de réticulation avec les composants de base et incluant le mélangeur statique et un câble inducteur entourant le mélangeur statique, le procédé comprenant, préalablement à l'application à chaud, le chauffage de la composition adhésive jusqu'à la température d'application, par l'alimentation électrique du câble inducteur du dispositif de chauffage en ligne ;
- le mélangeur est un mélangeur dynamique ;
- la composition adhésive à appliquer réticule à l'humidité ;
- l'installation comprend des moyens de chauffage apte à être disposés au niveau d'un réservoir de stockage comprenant au moins un des composants de base séparés pour élever l'au moins un composant de base séparé à une température de pompage, de préférence l'au moins un composant de base séparé est élevée à une température de pompage comprise entre 50°C et 140°, de préférence comprise entre 80°C et 120°C, plus préférentiellement entre 100°C et 110°C ;
- la composition adhésive est appliquée à une température comprise entre 50°C et 140°, de préférence comprise entre 80°C et 120°C, plus préférentiellement entre 100°C et 110°C.

D'autres caractéristiques et avantages de l'invention apparaîtront à la lecture de la description qui suit des modes de réalisation de l'invention, donnés à titre d'exemple et en référence aux dessins annexés.

La figure 1 montre une installation d'application de composition adhésive selon l'art antérieur.
Les figures 2, 3 et 4 montrent différentes variantes de plateau de fusion utilisées dans l'installation de la figure 1.
La figure 5 montre une installation susceptible de mettre en oeuvre le procédé proposée d'application de composition adhésive.
La figure 6 montre un mode de réalisation du mélangeur dynamique utilisé dans le procédé proposé.
La figure 7 montre un mode de réalisation du mélangeur statique utilisé dans le procédé proposé.

La figure 8 montre une olive de réduction de section au point de mélange des composants.
La figure 9 montre un dispositif de chauffage comprenant le mélangeur statique de la figure 7.

Il est proposé un procédé d'application à chaud d'une composition adhésive, en particulier d'une composition adhésive réticulable et notamment d'une composition adhésive réticulable à la chaleur et/ou réticulable à l'humidité. Cette composition adhésive peut correspondre à une composition adhésive sensible à la pression (également connu en anglais sous l'expression "*pressure sensitive adhesive*" abrégée en "*PSA*").

La composition adhésive à appliquer est une composition adhésive silylée. La composition adhésive peut ainsi correspondre aux compositions adhésives décrites dans le document WO 2012/090151 A2, l'au moins un prépolymère silylé étant par exemple un polyuréthane ou un polyether comprenant 2 groupes terminaux de type alkoxysilane hydrolysables. En particulier la composition adhésive à appliquer comprend :

- de 20% à 85% en poids, de préférence de 30 à 75% en poids de l'au moins un prépolymère silylé ;
- de 15 à 80% en poids, de préférence de 25 à 70% en poids de l'au moins une résine tackifiante compatible ;
- de 0,01 à 3 % en poids, de préférence de 0,1 à 2% en poids d'au moins un catalyseur de réticulation.

L'au moins un prépolymère contenant un silyle et l'au moins une résine tackifiante compatible font parties des composants de base de la composition adhésive à appliquer. En d'autres termes ces composants sont les composants de la composition indispensables pour l'obtention de la performance d'adhésion. Le prépolymère silylé réagit avec l'humidité, la réaction étant favorisée par le catalyseur. En plus des composants de base, la composition adhésive à appliquer peut ainsi comprendre des additifs, tel que le catalyseur de réticulation ou encore un anti-oxydant.

Le catalyseur qui favorise la réticulation de la composition adhésive, et en particulier du prépolymère silylé avec l'humidité est désigné dans l'ensemble de ce document par l'expression « catalyseur de réticulation ». De même que dans le cas général, le catalyseur de réticulation doit être distingué d'un agent de réticulation (également désigné par les expressions anglaises « curing agent » ou « cross-linking agent »). Ici, le prépolymère silylé réagissant, en particulier réticulant, avec l'humidité, l'eau est un réactif qui correspond à l'agent de réticulation du prépolymère silylé. L'agent de réticulation est consommé par la réaction de réticulation en étant, au moins en partie, combiné chimiquement aux chaînes réticulées, formant un réseau tridimensionnel. L'agent de réticulation ne peut ainsi être récupéré à la fin de la réaction de réticulation. A l'inverse, le catalyseur de réticulation favorise seulement la réaction de réticulation, et n'est pas, même partiellement, combiné chimiquement avec les chaînes réticulés.

Le catalyseur de réticulation utilisable dans le procédé proposé d'application à chaud peut être tout catalyseur connu par l'homme du métier pour la condensation de silanol. On peut citer comme exemples de tels catalyseurs des dérivés organiques du titane comme l'acétyl acétonate de titane (disponible commercialement sous la dénomination TYZOR(R) AA75 auprès de la société DuPont), de l'aluminium comme le chélate d'aluminium (disponible commercialement sous la dénomination K-KAT® 5218 auprès de la société King Industries), des amines comme le 1,8-diazobicyclo (5.4.0) undécène-7 ou DBU.

Le procédé proposé d'application à chaud est réalisé à l'aide d'une installation d'application à chaud. La figure 5 montre une représentation schématique d'un mode de réalisation de l'installation 20. Les éléments communs aux figures 1 et 5 présentent les mêmes signes de référence.

L'installation 20 utilisée pour le procédé proposé diffère notamment de l'installation 100 de la figure 1 en ce qu'elle comporte un double approvisionnement de la ligne d'alimentation 88. Ce double approvisionnement permet la séparation du prépolymère silylé et du catalyseur de réticulation avant leur application en mélange à l'aide du procédé proposé.

Le catalyseur de réticulation se distingue notamment d'un agent de réticulation

Du fait du double approvisionnement, les composants 66, comprenant au moins le catalyseur de réticulation, sont séparés des composants 68, comprenant au moins le prépolymère silylé, jusqu'à un mélangeur 30 disposé dans la ligne d'alimentation 88. En d'autres termes, le mélangeur 30 est en ligne et permet la réalisation d'une étape de mélange homogène des composants 66 et 68 approvisionnés séparément à la ligne d'alimentation 88. L'injection des composants 66, comprenant au moins le catalyseur de réticulation, dans les composants de base 68, comprenant au moins le prépolymère silylé, est réalisée au niveau du mélangeur 30, tel qu'illustré, pour permettre le mélange immédiat de ces composants.

Le mélangeur 30 constitue une différence entre l'installation 20 illustrée en figure 5 et l'installation 100 précédemment illustrée par la figure 1 pour laquelle les composants de base sont déjà assemblés pour former la composition adhésive 80 dans le réservoir de stockage 82. Selon le procédé proposé, les composants sont au moins partiellement séparés en deux approvisionnements distincts de la ligne d'alimentation 88, le prépolymère silylé étant séparé du catalyseur de réticulation. Par exemple, le composant de base constitué par le prépolymère silylé peut être séparé des composants constitué par la résine tackifiante et le catalyseur de réticulation, de même, les composants de base constitués par le prépolymère silylé et la résine tackifiante peuvent être séparés du catalyseur de réticulation. Les composants 66 et 68 peuvent ainsi être séparés partiellement, c'est-à-dire qu'un groupe de composants peut être approvisionné séparément d'un autre groupe de composants. Alternativement les composants peuvent être séparés totalement, c'est-à-dire que chaque composant est approvisionné séparément à l'installation d'application à chaud 20.

Dans tous les cas, la séparation d'au moins le prépolymère silylé et du catalyseur de réticulation tels que précédemment définis permet de contrarier la réaction chimique de réticulation avant la réunion des composants dans l'installation 20. La réaction chimique de réticulation étant contrariée dans chaque composant au moins partiellement séparé, ces composants présentent une plus grande stabilité : temporelle, à la température et à l'humidité. En d'autres termes, le procédé proposé permettant la réunion au niveau d'une même installation, ici 20, du mélange des composants 66 et 68 et de l'application de la composition adhésive, la stabilité des composants est améliorée.

La plus grande stabilité dans le temps permet un maintien en stockage plus long des composants entre leur production et leur application à chaud.

En outre, la plus grande stabilité des composants à la température et à l'humidité facilite l'application à chaud de la composition adhésive. En effet, en référence à la figure 5, le composant 68 peut être chauffé dans le réservoir de stockage 82 à l'aide d'un moyen de chauffage 44, tel que les plateaux de fusion précédemment illustrés par les figures 2 à 4, sans provoquer la réticulation du composant 68 du fait de la séparation du composant 66, comprenant au moins le catalyseur de réticulation. Le chauffage dans le réservoir de stockage 82, représenté sous forme de fût, permet de diminuer la viscosité du composant 68, comprenant par exemple le prépolymère silylé et la résine tackifiante compatible, pour faciliter le pompage dans l'installation 20, tel qu'à l'aide d'une pompe 46, avant tout contact avec le composant 66 séparé, comprenant par exemple le catalyseur de réticulation.

Ce moyen de chauffage 44 contribue à la mise en température d'application du composant 68. La température d'application correspond à une température où la composition adhésive à appliquer présente une viscosité suffisamment faible pour permettre l'application, autrement dit l'enduction, de la composition adhésive 80 sur la surface 96. En effet, après le mélange des composants 66 et 68, la composition adhésive est constituée et peut être appliquée à chaud sur le support 96 à l'aide d'une buse d'application 50. Une température d'application de la composition adhésive 80 peut ainsi correspondre à une température où la viscosité de la composition adhésive est inférieure ou égale à 20 Pa.s, de préférence inférieure ou égale à 10 Pa.s. A titre d'exemple, la composition adhésive 80 peut présenter une viscosité de 15 ± 5 Pa.s à une température d'application de 100°C à 120°C. A la suite de l'application de la composition adhésive 80 sur la surface 96, le support enduit 98 est soumis à une température contrôlée, et éventuellement à un taux d'humidité contrôlé, pour permettre la réticulation de la composition adhésive. La température contrôlée peut être obtenue à l'aide d'un four ou d'une enceinte. La température contrôlée correspond à une température de réticulation de la composition adhésive 80 et est par exemple comprise entre 50°C et 200°C. Plus particulièrement, la température de réticulation comprise entre 80°C et 160°C ou encore comprise entre 100°C et 150°C.

De manière analogue le composant 66 peut lui aussi être chauffé avant son mélange avec le composant 68 sans risque de réticulation avant leur mélange.

Le chauffage de l'ensemble des composants 66 et 68 séparés avant leur mélange permet d'amener ces composants à la température d'application sans risque de réticulation avant leur mélange en ligne 88 dans le mélangeur 30. Le temps de séjour de la composition adhésive obtenue par le mélange est alors réduit par rapport au temps de séjour de ladite composition dans le procédé mis en oeuvre dans l'installation 100 de la figure 1

En permettant une réduction du temps de séjour à chaud de la composition adhésive 80, le procédé proposé peut effectuer la mise en température d'application de la composition adhésive 80, même dans le cas où la température d'application est incluse dans la plage de température de réticulation de la composition adhésive 80. Selon la température prévue d'application incluse dans la plage de température de réticulation, le temps de séjour à chaud de la composition adhésive 80 en mouvement peut alors être adapté. Le temps de séjour à chaud de la composition adhésive en mouvement peut notamment être modulé avec le débit de la composition adhésive 80 et la cylindrée de la ligne d'alimentation 88 depuis le point de mélange des composants séparés 66, 68 et la buse d'application 50. Par exemple, pour une composition adhésive 80 à appliquer à 100°C et présentant une plage de température de réticulation de 100°C à 120°C avec des temps de réticulation d'une à quelques minutes (sans apport additionnel d'humidité), le débit de la composition adhésive 80 en ligne peut être ajusté afin que la réaction de réticulation reste limitée pour ne pas encrasser l'installation avec de la composition adhésive réticulée. La progression de la réaction de réticulation peut être appréciée en référence au taux de conversion de la réaction de réticulation dans l'installation déterminé selon l'équation suivante :

$$(1) \qquad X = \frac{\dot{m}_0 - \dot{m}_t}{\dot{m}_0}$$

où X est le taux de conversion sans unité ;
$\dot{m}_0$ est le débit massique de composition adhésive non réticulé au niveau du réservoir de stockage 82 sous forme de fût ;
$\dot{m}_t$ est le débit massique de composition adhésive non réticulé au niveau de la buse 50.

Le débit de la composition adhésive 80 en ligne peut être ainsi être ajusté pour que, selon la cinétique de réaction et selon la température, le taux de conversion de la réaction de réticulation de la composition adhésive reste inférieur ou égal à 30%, de préférence inférieur ou égal à 10%. Le débit de la composition adhésive 80 dans le dispositif de chauffage en ligne est par exemple compris entre 80 g.s$^{-1}$ et 170 g.s$^{-1}$, soit environ de 5 à 10 Kg par minutes, tel que égal à 120g.s$^{-1}$, soit environ de 7 Kg par minutes.

Pour permettre un mélange des composants avec un débit élevé, le mélangeur en ligne 30 peut être adapté à un mélange très efficace.

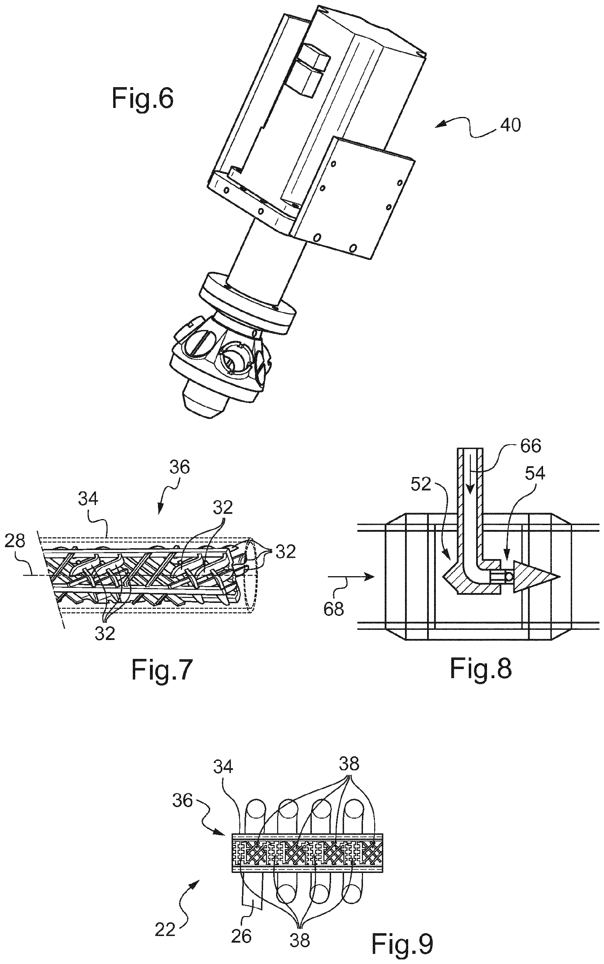

Le mélangeur 30 peut être un mélangeur dynamique 40 tel qu'illustré en figure 6. Alternativement, la figure 7 montre une vue en perspective de la structure interne d'un mode de réalisation du mélangeur 30 en mélangeur statique 36. Les mélangeurs statiques sont notamment connus pour être utilisés dans l'industrie du moulage par injection afin d'homogénéiser la matière avant l'injection dans un moule. Le mélangeur statique 36 en ligne 88 comprend au moins un élément de mélange présentant des surfaces de déflexion 32 du fluide visant à obtenir un mélange homogène du fluide sur une courte distance et avec un faible cisaillement. Les éléments de mélange peuvent présenter une densité de surface supérieure ou égale à 5*10$^3$ m$^{-1}$, de préférence com-prise entre 5*10$^3$ m$^{-1}$ et 10*10$^3$ m$^{-1}$. La densité de surface correspond à une quantité de surfaces de déflexion par volume et est donc exprimé en m$^2$/m$^3$, i.e. en m$^{-1}$.

Le mélangeur statique 36 peut en outre être pourvu d'une olive 52 au niveau du point d'injection du composants de base 66 dans la ligne 88, tel qu'illustré en figure 8). Cette olive 52 réduisant la section de passage libre 54 pour le composant 66 augmente alors localement la vitesse d'écoulement du composant de base lors de son mélange avec le composant 68 le faisant successivement passer d'un régime laminaire, à un régime intermédiaire ou turbulent au passage de l'olive, facilitant la dispersion du composant 66 dans le composant 68, puis à un régime laminaire. Ce mode de réalisation est particulièrement préféré lorsque le composant 66 comprend le catalyseur de réticulation. En effet, au point de contact, ou point de mélange, le catalyseur de réticulation se retrouve localement à une forte concentration augmentant fortement la cinétique de réaction avec le composant de base 68. L'augmentation locale de la vitesse de défilement permet alors de limiter le temps de contact, au point d'injection, entre le composant 66 et le composant 68 avant leur mélange plus homogène, et donc moins réactif localement. Cette augmentation locale de la vitesse de défilement du composant 66, tel que le catalyseur de réticulation, permet par exemple d'augmenter la concentration du catalyseur de réticulation à injecter sans craindre la réticulation locale au point de mélange.

Tel qu'illustré en traits discontinus en figure 7, le mélangeur statique présente l'ensemble des éléments de mélange comme comprenant des surfaces de déflexion 32 disposés dans un fourreau 34. Le fourreau 34 forme un conduit de circulation de la composition adhésive 80. Le mélangeur 36 étant disposé en ligne, le fourreau 34, en tant que conduit de circulation du mélangeur 36, est une portion de la ligne 88.

Le mélangeur statique 36 peut présenter la particularité de comporter un matériau conducteur électriquement. Dans ce document, on entend par un matériau conducteur électriquement, un matériau présentant une résistivité inférieure à 10 $\Omega$.m, de préférence inférieur $10^{-6}$ $\Omega$.m. Cette particularité permet l'ajout d'une fonction de chauffage par induction au mélangeur 36. Cet ajout d'une fonction de chauffage au mélangeur 36 peut aussi être réalisé lorsque le mélangeur est un mélangeur dynamique. Toutefois, les composants 66 et 68 pouvant être chauffés à la température d'application sans risque de réticulation, l'ajout de la fonction de chauffage présente particulièrement l'intérêt de maintenir la température d'application au niveau du mélangeur 36.

En référence à la figure 9, le mélangeur 36 sous forme de mélangeur statique peut être en partie inclus dans un dispositif de chauffage en ligne 22, ce dispositif 22 comprenant un câble inducteur entourant le mélangeur statique. Le dispositif de chauffage en ligne est de préférence disposé en amont du point de mélange des composants 66 et 68, une partie mélangeur statique 36 étant disposée en aval du point de mélange. Le champ magnétique généré par le câble inducteur 26 entourant le mélangeur statique 36 est alors susceptible d'induire un courant électrique, connu sous le nom de courant de Foucault, dans le conducteur électrique du mélangeur statique 36. Les courants de Foucault induits dans le conducteur électrique entraînent un dégagement de chaleur par effet Joule qui se diffuse à la composition adhésive 80 par l'intermédiaire des composants du mélangeur statique 36. Le câble inducteur 26 est par exemple alimenté à l'aide d'un courant électrique à haute fréquence, de préférence supérieure ou égale à 1 MHz, telle qu'à 15 MHz.

Selon un mode de réalisation préféré du dispositif de chauffage en ligne 22, le fourreau 34 est en matériau isolant électriquement. Dans ce document, on entend par matériau isolant électriquement un matériau présentant une résistivité supérieure ou égale à $10^6$ $\Omega$.m. Le matériau isolant du fourreau 34 est par exemple du verre ou un prépolymère dépourvu de charges conductrices. Selon ce mode de réalisation préféré, les éléments de mélange 38 sont réalisés en matériau conducteur électriquement pour permettre le chauffage par induction du mélangeur statique 36. En effet, comme indiqué précédemment, le câble inducteur 26 est susceptible, avec une alimentation électrique en courant alternatif, d'induire un courant de Foucault dans tout conducteur électrique placé dans le champ magnétique produit.

L'induction des courants de Foucault se réalise alors directement dans les éléments de mélange 38 au niveau des surfaces de déflexion 32, et non pas au niveau du fourreau 34 placé entre le câble inducteur et les éléments de mélange 38. La réalisation d'une induction et d'un effet Joule au niveau des surfaces de déflexion 32 permet un chauffage plus efficace de la composition adhésive 80 qui rentre en contact directement avec ces surfaces de déflexion 32, sans intermédiaire.

Selon un mode de réalisation moins avantageux, le fourreau 34 est en matériau conducteur, de sorte que l'induction de courant de Foucault ne pénètre que le fourreau 34 et pas les éléments de mélange 38. L'effet Joule se produit alors au niveau du fourreau 34, et la chaleur se diffuse à la composition adhésive 80 par conduction grâce à l'intermédiaire des surfaces de déflexion 32. Dans ce mode de réalisation moins avantageux proposé, l'échange thermique est moins efficace du fait de l'utilisation d'un intermédiaire pour conduire la chaleur.

Selon un mode de réalisation préféré du procédé proposé 20, la buse d'application 50 peut aussi être chauffée. Le chauffage de la buse 50 contribue alors à la mise en température d'application de la composition adhésive 80. Ainsi selon ce mode de réalisation, la buse 50 d'application fait partie du dispositif de chauffage 22 à la température d'application. Le chauffage de la buse 50 permet d'apporter de l'énergie thermique en fin de ligne 88 pour amener la composition adhésive à la température finale d'application. Cette température finale d'application n'étant atteinte qu'en fin de ligne 88, le temps de séjour à cette température est court, limitant alors les risques de réticulation de la composition adhésive. Selon ce mode de réalisation, les composants de base 66 et 68 peuvent être chauffés à une température un peu plus faible, par exemple de 10°C ou moins, que la température finale d'application. La température de la composition adhésive 80 dans le mélangeur statique 30 étant plus faible que la température d'application, la durée de réticulation à cette température est plus faible et les risques de bouchon en ligne sont alors encore diminués.

Bien entendu, la présente invention n'est pas limitée aux exemples et aux modes de réalisation décrits et représentés. L'invention est définie par l'étendue des revendications.

**Revendications**

1. Procédé d'application à chaud d'une composition adhésive (80) sur un support (96), à l'aide d'une installation d'application à chaud de la composition adhésive, l'installation comprenant :

   - une buse (50) d'application de la composition adhésive (80),
   - une ligne (88) d'alimentation de la buse (50) avec la composition adhésive (80) à appliquer sous forme fluide,
   - un mélangeur (30) disposé dans la ligne d'alimentation (88) pour le mélange homogène des composants de base de la composition adhésive avant son application ;

la composition adhésive (80) appliquée comportant comme composants de base :

- de 20% à 85% en poids, de préférence de 30 à 75% en poids de prépolymère silylé,
- de 15 à 80% en poids, de préférence de 25 à 70% en poids de résine tackifiante compatible ;

la composition adhésive comprenant en outre de 0,01 à 3 % en poids, de préférence de 0,1 à 2% en poids de catalyseur de réticulation ;
le procédé comprenant :

- l'approvisionnement de la ligne (88) d'alimentation avec l'au moins un prépolymère silylé séparé du catalyseur de réticulation,
- le mélange du catalyseur de réticulation avec les composants de base à l'aide du mélangeur (30),
- l'application à chaud de la composition adhésive (80) mélangée sur un support (96) à l'aide la buse d'application (50) ;

le procédé étant **caractérisé en ce que** la composition adhésive à appliquer (80) comprend un prépolymère réactif réticulant dans une plage de température, la composition adhésive à appliquer (80) présentant une plage de température d'application incluse dans la plage de température de réticulation.

2. Procédé d'application à chaud selon la revendication 1, dans lequel, lors de l'approvisionnement de la ligne, le catalyseur de réticulation est séparé de l'ensemble des composants de base de la composition adhésive.

3. Procédé d'application à chaud selon la revendication 1 ou 2, dans lequel le mélangeur est un mélangeur statique.

4. Procédé d'application à chaud selon la revendication 3, dans lequel le mélangeur statique comporte un matériaux conducteur électriquement, l'installation d'application à chaud comprenant un dispositif de chauffage en ligne (22), en amont du point de mélange du catalyseur de réticulation avec les composants de base et incluant le mélangeur statique (30) et un câble inducteur (26) entourant le mélangeur statique (30), le procédé comprenant, préalablement à l'application à chaud, le chauffage de la composition adhésive jusqu'à la température d'application, par l'alimentation électrique du câble inducteur (26) du dispositif de chauffage en ligne (22).

5. Procédé d'application à chaud selon la revendication 1 ou 2, dans lequel le mélangeur est un mélangeur dynamique.

6. Procédé d'application à chaud selon l'une des revendications 1 à 5, dans lequel la composition adhésive à appliquer (80) réticule à l'humidité.

7. Procédé d'application à chaud selon l'une des revendications 1 à 6, dans lequel l'installation comprend des moyens de chauffage (44) apte à être disposés au niveau d'un réservoir de stockage (82) comprenant au moins un des composants de base séparés pour élever l'au moins un composant de base séparé à une température de pompage.

8. Procédé d'application à chaud selon la revendication 7, dans lequel l'au moins un composant de base séparé est élevé à une température de pompage comprise entre 50°C et 140°, de préférence comprise entre 80°C et 120°C, plus préférentiellement entre 100°C et 110°C.

9. Procédé d'application à chaud selon l'une des revendications 1 à 8, dans lequel la composition adhésive (80) est appliquée à une température comprise entre 50°C et 140°, de préférence comprise entre 80°C et 120°C, plus préférentiellement entre 100°C et 110°C.

**Patentansprüche**

1. Verfahren zur Heißapplikation einer Klebstoffzusammensetzung (80) auf einen Grundmaterial (96) mittels einer Anlage zur Heißapplikation der Klebstoffzusammensetzung, wobei die Anlage umfasst:

- eine Düse (50) zum Applizieren der Klebstoffzusammensetzung (80),
- eine Leitung (88) zur Versorgung der Düse (50) mit der in flüssiger Form zu applizierenden Klebstoffzusammensetzung (80),
- einen in der Versorgungsleitung (88) angeordneten Mischer (30) zum homogenen Mischen der Grundbestandteile der Klebstoffzusammensetzung vor ihrer Applikation;

wobei die applizierte Klebstoffzusammensetzung (80) als Grundbestandteile umfasst:

- 20 bis 85 Gew.-%, vorzugsweise 30 bis 75 Gew.-% eines silylierten Prepolymers,
- 15 bis 80 Gew.-%, vorzugsweise 25 bis 70 Gew.-% eines verträglichen klebrigmachenden Harzes;

wobei die Klebstoffzusammensetzung außerdem 0,01 bis 3 Gew.-%, vorzugsweise 0,1 bis 2 Gew.-%

eines Vernetzungskatalysators umfasst; wobei das Verfahren umfasst:

- das Zuführen der Versorgungsleitung (88) mit dem mindestens einen vom Vernetzungskatalysator getrennten silylierten Prepolymers ,
- das Mischen des Vernetzungskatalysators mit den Grundbestandteilen mittels des Mischers (30),
- die Heißapplikation der gemischten Klebstoffzusammensetzung (80) auf einen Grundmaterial (96) mittels der Applikationsdüse (50);

wobei das Verfahren **dadurch gekennzeichnet ist, dass** die zu applizierende Klebstoffzusammensetzung (80) ein in einem Temperaturbereich vernetzendes reaktives Prepolymer umfasst, wobei die zu applizierende Klebstoffzusammensetzung (80) einen Applikations-Temperaturbereich innerhalb des Vernetzungs-Temperaturbereichs aufweist.

2. Verfahren zur Heißapplikation nach Anspruch 1, wobei während des Zuführens der Leitung der Vernetzungskatalysator von der Gesamtheit der Grundbestandteile der Klebstoffzusammensetzung getrennt ist.

3. Verfahren zur Heißapplikation nach Anspruch 1 oder 2, wobei es sich beim Mischer um einen statischen Mischer handelt.

4. Verfahren zur Heißapplikation nach Anspruch 3, wobei der statische Mischer ein elektrisch leitendes Material umfasst, wobei die Heißapplikationsanlage eine Inline-Heizungsvorrichtung (22) vor dem Mischpunkt des Vernetzungskatalysators mit den Grundbestandteilen umfasst sowie den statischen Mischer (30) und ein leitender Draht (26) um den statischen Mischer (30) enthält, wobei das Verfahren vor der Heißapplikation das Erwärmen der Klebstoffzusammensetzung durch die elektrische Versorgung des leitenden Drahtes (26) der Inline-Heizungsvorrichtung (22) auf die Applikationstemperatur aufweist.

5. Verfahren zur Heißapplikation nach Anspruch 1 oder 2, wobei es sich beim Mischer um einen dynamischen Mischer handelt.

6. Verfahren zur Heißapplikation nach einem der Ansprüche 1 bis 5, wobei die zu applizierende Klebstoffzusammensetzung (80) mit Feuchtigkeit vernetzt.

7. Verfahren zur Heißapplikation nach einem der Ansprüche 1 bis 6, wobei die Anlage Heizmittel (44) umfasst, die in der Nähe eines Speicherbehälters (82) angeordnet sein können, der mindestens einen der getrennten Grundbestandteile umfasst, um mindestens einen der getrennten Grundbestandteile auf eine Pumptemperatur zu erhöhen.

8. Verfahren zur Heißapplikation nach Anspruch 7, wobei mindestens einer der getrennten Grundbestandteile auf eine Pumptemperatur zwischen 50 °C und 140 °C, vorzugsweise zwischen 80 °C und 120 °C, noch mehr bevorzugt zwischen 100 °C und 110 °C, erhöht wird.

9. Verfahren zur Heißapplikation nach einem der Ansprüche 1 bis 8, wobei die Klebstoffzusammensetzung (80) bei einer Temperatur zwischen 50 °C und 140 °C, vorzugsweise zwischen 80 °C und 120 °C, noch mehr bevorzugt zwischen 100 °C und 110 °C, appliziert wird.

**Claims**

1. Method of hot application of an adhesive composition (80) on a base material (96), by means of an installation for hot application of the adhesive composition, the installation comprising:

- a nozzle (50) for application of the adhesive composition (80),
- a line (88) for supplying the nozzle (50) with the adhesive composition (80) to be applied in fluid form,
- a mixer (30) disposed in the supply line (88) for the homogeneous mixing of the base components of the adhesive composition prior to the application thereof;

the applied adhesive composition (80) comprising, as basic components:

- 20 to 85 wt.%, preferably 30 to 75 wt.% of silylated prepolymer,
- 15 to 80 wt.%, preferably 25 to 70 wt.% of compatible tackifying resin;

the adhesive composition further comprising from 0.01 to 3 wt.%, preferably from 0.1 to 2 wt.% of cross-linking catalyst; the method comprising:

- supplying the supply line (88) with at least one silylated prepolymer separated from the cross-linking catalyst,
- the mixing of the cross-linking catalyst with the base components by means of the mixer (30),
- the hot application of the mixed adhesive composition (80) on a base material (96) by means of the application nozzle (50),

the method being **characterized in that** the adhesive composition to be applied (80) comprises a reactive prepolymer cross-linking within a temperature range, the adhesive composition to be applied (80) having an application temperature range included within the cross-linking temperature range.

2. The hot application method according to claim 1, wherein, during the supplying of the line, the cross-linking catalyst is separated from all the base components of the adhesive composition.

3. The hot application method according to claims 1 or 2, wherein the mixer is a static mixer.

4. The hot application method according to claim 3, wherein the static mixer comprises electrically conductive material, the hot application installation comprising an in-in-line heating device (22), upstream from the mixing point of the cross-linking catalyst with the base components and including the static mixer (30) and a conductive wire (26) encircling the static mixer (30), the method comprising, prior to the hot application, the heating of the adhesive composition up to the application temperature, by the electric supply of the conductive wire (26) of the in-line heating device (22).

5. The hot application method according to claims 1 or 2, wherein the mixer is a dynamic mixer.

6. The hot application method according to any one of claims 1 to 5, wherein the adhesive composition to be applied (80) cross-links with moisture.

7. The hot application method according to any one of claims 1 to 6, wherein the installation comprises heating means (44) capable of being disposed at a storage tank (82) comprising at least one of the separated base components in order to raise the at least one separated base component to a pumping temperature.

8. The hot application method according to claim 7, wherein the at least one separated base component is raised to a pumping temperature of between 50°C and 140°C, preferably between 80°C and 120°C, more preferentially between 100°C and 110°C.

9. The hot application method according to any one of claims 1 to 8, wherein the adhesive composition (80) is applied at a temperature of between 50°C and 140°C, preferably between 80°C and 120°C, more preferentially between 100°C and 110°C.

Fig.6

40

Fig.7

36

34

28

32

32

32

32

Fig.8

66

52

54

68

34

38

36

22

26

38

Fig.9

**RÉFÉRENCES CITÉES DANS LA DESCRIPTION**

**Documents brevets cités dans la description**

- WO 2012090151 A
- WO 2012090151 A2